# EUROPEAN PATENT APPLICATION

(11) **EP 2 728 161 A1**
(43) Date of publication of application: **07.05.2014**
(21) Application number: 12191307.3
(22) Date of filing: 05.11.2012
(51) Int. Cl.: F02M 59/46, F16K 15/02, F16K 17/04

(54) **Outlet Valve Assembly**

(71) Applicant: Delphi Technologies Holding S.à.r.l., 4940 Bascharage (LU)
(72) Inventor: Felton, George Nicholas, Gillingham, Kent ME8 0HD (GB); Tansug, Onur Mehmet, 35540 Izmir (TR)
(74) Representative: Neill, Andrew Peter

(57) **Abstract**

An outlet valve assembly for a common rail fuel pump for an internal combustion engine, comprising a valve member (18) provided with a frusto-conical surface which is engageable with a valve seating (16) to control fuel flow between a high pressure pump volume of the fuel pump and a common rail located downstream of the pump volume, and an outlet flow passage (36, 32, 34) for fuel through which fuel flows to the common rail when the valve member (18) is lifted from the valve seating (16). A valve housing (12) is provided within a valve housing bore (14), the valve member (18) including a guide portion (18a) which cooperates with the valve housing bore (14) so as to guide movement of the valve member (18), in use. The valve seating (16) is defined by the valve bore housing (14) and is of frusto-conical form.

## Description

### Field of the Invention

The invention relates to a valve assembly for use in a fuel pump for an internal combustion engine. In particular, but not exclusively, the invention relates to an outlet valve assembly for use in a fuel pump for supplying fuel to a common rail of an internal combustion engine.

### Background to the Invention

In common rail fuel systems for diesel engines, a high pressure fuel pump receives fuel at relatively low pressure (e.g. transfer pressure) from a low pressure pump and pressurises fuel in a pump chamber to a high level suitable for injection. The high pressure fuel pump supplies pressurised fuel to a fuel accumulator volume, referred to as the common rail, from where the pressurised fuel is delivered to the downstream fuel injectors of the system. The fuel pump is typically provided with an outlet valve assembly which includes a ball which is engageable with a frusto-conical valve seating to control the flow of pressurised fuel from the pump chamber to the common rail. The ball component of the valve arrangement is a low cost component and so is widely used in pumps of this type, both in the outlet valve assembly and for other valve functions too. However, the ball has a number of disadvantages which mean that its use in high pressure fuel pumps for today's engines is not always satisfactory especially considering the increasingly high fuel pressures at which such pumps operate.

For example, the higher operation pressures of today's fuel pumps means that the loading requirements on the ball valve are increased and higher spring forces are needed to seat the valve. This is problematic when purging the system, for example in a new engine or following a filter change. Also, as the ball valve is typically not guided, it does not necessarily seat on the exact centre of the valve seating immediately that the valve is caused to close, but may slide onto the valve seating after a short time. This slight delay in valve closure also has a detrimental effect on performance, and especially at higher fuel pressures. As the ball is not guided, another disadvantage is that lift of the ball valve is not controlled. In addition, the flow path increase during opening of the ball valve is not linear due to the geometrical nature of the ball/seat interface.

It is with a view to addressing at least one of the aforementioned disadvantages that the present invention provides an improved outlet valve assembly for a common rail fuel pump for an internal combustion engine.

### Summary of the Invention

According to a first aspect of the invention, there is provided an outlet valve assembly for a common rail fuel pump for an internal combustion engine, comprising a valve member provided with a frusto-conical surface which is engageable with a valve seating to control fuel flow between a high pressure pump volume of the fuel pump and a common rail located downstream of the pump volume. An outlet flow passage allows fuel to flow to the common rail when the valve member is lifted from the valve seating. A valve housing is provided with a valve housing bore, and the valve member includes a guide portion which cooperates with the valve housing bore so as to guide movement of the valve member during opening and closing movement, in use. The valve seating is defined by the valve bore housing and is of frusto-conical form.

Particularly due to the conical/conical nature of the seating interface, the invention provides an advantage over known outlet valve assemblies which utilise a ball valve which seats on a conical valve seating to control the outlet flow from the pump volume to the common rail. In a preferred embodiment, the valve member includes a cylindrical guide portion which is guided within the valve housing bore. Because the valve member is guided within the valve housing bore, the frusto-conical surface of the valve member seats exactly and precisely on the valve seating at each valve closure and, hence, wear of the valve seating is limited. As the contact diameter between the valve member and the valve seating remains substantially constant throughout life, the opening pressure of the assembly remains substantially constant. With a ball valve seating on a conical surface, as in known arrangements, the contact diameter wears because the ball is not guided, giving rise to contact pressure and opening pressure variations. It is not convenient to guide a ball valve as it is necessary to provide a flow path for fuel around the ball once the valve has lifted away from its seating. Also, as the seat diameter tends to wear in ball valve assemblies, outlet valve assemblies known in the prior art are more prone to leakage.

A further advantage is provided by the invention in that there is a linear increase in flow area as the valve member moves away from the valve seating, which results an improved performance.

The valve member may be provided with a bore to define an axial flow passage for fuel flow through the valve member which defines at least a part of the outlet flow passage.

By way of example, the valve member may be provided with at least one cross drilling which communicates with the axial flow passage to allow fuel flow into the axial flow passage when the valve member is lifted from the valve seating.

In one embodiment, the outlet valve assembly may further comprise a lift stop member which serves to limit the extent of opening movement of the valve member when it is lifted away from the valve seating. So, once the valve member has moved through a predetermined-distance, as determined by the position of the lift stop member, its movement is stopped.

By way of example, the lift stop member may be received within the valve housing bore. By adjusting the position of the lift stop member within the bore, the maximum lift of the valve member can be adjusted so as to optimise performance for different applications. Forming a lift stop for a valve member having a cylindrical body is more convenient than forming a lift stop for a ball valve, and so the present invention provides a further advantage over the prior art in this regard.

The outlet valve assembly may further comprise a biasing means, for example in the form of a spring, which serves to urge the valve member towards the valve seating. The spring may be selected to have a lower spring load than in existing outlet valve assemblies that utilise a ball valve because the seating of the conical surface of the valve member at the conical valve seating provides enhanced sealing and, hence, reduced leakage. One benefit of this is that priming times for purging the system, for example within a new engine or after a filter change, can be reduced as the spring load to be overcome in opening the valve assembly is lower.

The valve member may be provided with an end region which defines, in part, a spring chamber for receiving at least a part of the spring, and wherein the other end of the spring is engaged with the lift stop member.

The lift stop member may be provided with an axial flow passage which forms a part of the outlet flow passage.

In one embodiment, the lift stop member may be received within a first portion of the valve housing bore and the valve member may be received within a second portion of the valve housing bore, wherein the diameter of the first portion is enlarged compared with the diameter of the second portion.

Conveniently, the valve member has an end face which engages with the lift stop member, the end face being provided with one or more grooves, notches or recesses to allow fuel flow therethrough so as to prevent the occurrence of hydraulic lock within the spring chamber, in particular due to the pressure drop which occurs when the volume of the pump chamber is expanded.

The frusto-conical valve seating surface defines a first cone angle and the frusto-conical surface of the valve member defines a second cone angle, and wherein a differential angle between the first and second cones angles is no more than 2 degrees, and is preferably 1.5 degrees (+/- 1 degree).

According to a second aspect of the invention, there is provided a common rail fuel pump for use in a common rail fuel system, the common rail fuel pump having a high pressure pump volume for supplying pressurised fuel to a common rail of the fuel system and an outlet valve assembly in accordance with the first aspect of the invention, for controlling the flow of fuel between the high pressure pump volume and the common rail.

In one embodiment, the common rail fuel pump includes a main pump housing which is integrally formed with the valve housing so that movement of the valve member is guided within the main pump housing and the valve member seats on a valve seating defined within the main pump housing.

It will be appreciated that preferred and/or optional features of the first aspect of the invention may be incorporated alone or in appropriate combination in the second aspect of the invention also.

### Brief Description of the Drawings

In order that the invention may be more readily understood, preferred non-limiting embodiments thereof will now be described with reference to the accompanying drawings, in which:
Figure 1 is a cross sectional view of an outlet valve assembly of a first embodiment of the invention;

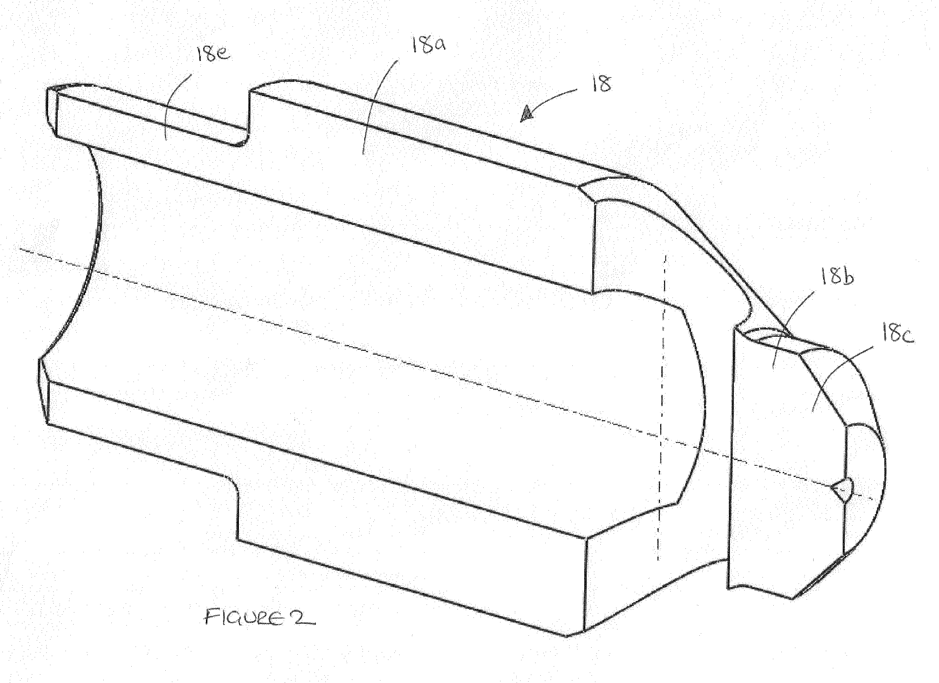

Figure 2 is a cut-away perspective view of the valve member of the outlet valve assembly in Figure 1;

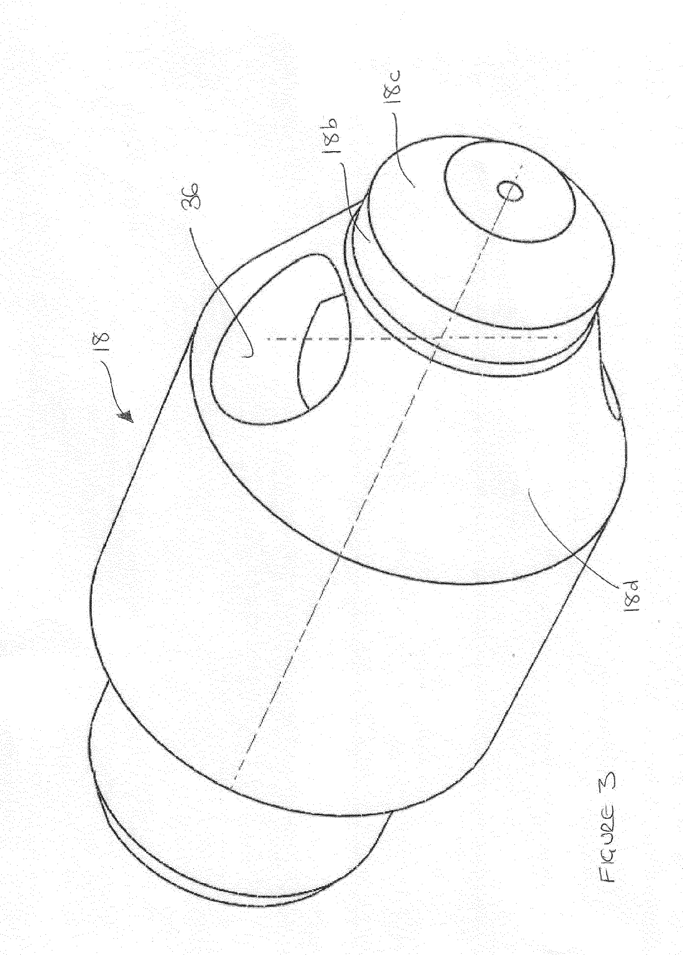

Figure 3 is a perspective view of the valve member in Figure 2 from a first end; and
Figure 4 is a perspective view of the valve member in Figure 3 from the other end.

### Detailed Description of Embodiments of the Invention

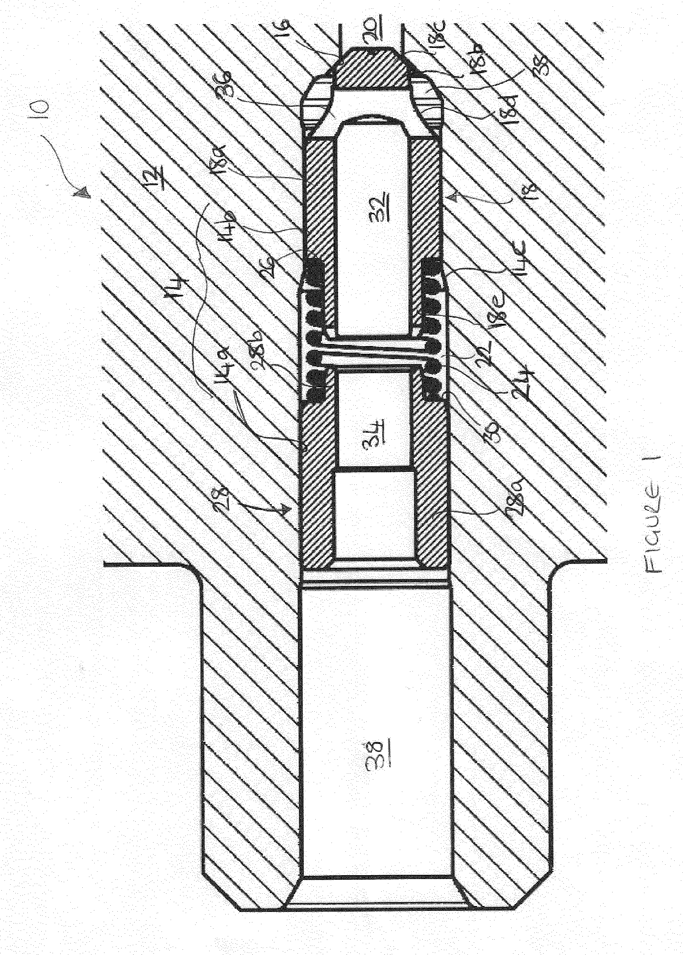

Referring to Figure 1, there is shown an outlet valve assembly, referred to generally as 10, of a first embodiment of the invention for use in a common rail fuel system. The outlet valve assembly 10 is situated between a high pressure pump volume (not shown) and a common rail (not shown) of the common rail fuel system, and serves to control whether fuel is able to flow from the high pressure pump volume to the common rail, and to prevent flow in the opposite direction from the common rail to the high pressure pump volume. Typically the high pressure pump includes a pumping plunger (not shown) which is reciprocal within a plunger bore provided in a pump housing so as to pressurise fuel within the high pressure pump volume, which is defined within the plunger bore.

When the outlet valve assembly 10 is in an open state, fuel is able to flow from the high pressure pump volume to the common rail, and when the outlet valve assembly is in a closed state fuel flow from the high pressure pump volume to the common rail is prevented. In the closed state fuel is also prevented from flowing from the common rail back into the pump volume. Typically the pump volume takes the form of a pump chamber within which fuel is pressurised to a relatively high level by means of the pumping plunger, and the pressurisation level is typically in the range of 500 bar to 2500 bar. For full load, full speed conditions, the pressurisation level is typically in excess of 2000 bar.

The outlet valve assembly 10 includes a valve housing 12 which is provided with a valve housing bore 14 including a first bore portion 14a of slightly enlarged diameter compared with a second bore portion 14b of slightly reduced diameter. A transition region 14c of the housing bore 14 tapers in diameter between the first and second bore regions 14a, 14b. The valve housing bore 14 further includes a frusto-conical surface which defines a valve seating 16 for a valve member 18. The valve member 18 includes a frusto-conical surface towards its end which is engageable with the valve seating 16 to control the flow of fuel between the high pressure pump volume (not shown) and the valve housing bore 14 and, ultimately, the common rail. The valve bore 14 communicates with an inlet drilling 20 provided in the valve housing 12, one end of which opens into the valve housing bore 14 in the region of the valve seating 16 and the other end of which communicates, either directly or via other flow passages, with the high pressure pump volume.

In one embodiment, the valve housing 12 forms an integral part of the housing for the high pressure pump, which also therefore defines the valve seating 16 for the valve member 18. In this embodiment the valve member 18 is therefore guided directly within a bore of the pump housing.

The valve member 18 includes a guide region 18a of cylindrical form, a second region 18b of cylindrical form, a seating region 18c at the end of the valve member, and an intermediate region 18d which is located between the cylindrical regions 18a, 18b. The intermediate region 18d has a taper between the enlarged diameter of the guide region 18a and the smaller diameter cylindrical region 18b. The guide region 18a of the valve member is of substantially the same diameter as the guide portion 14a of the valve housing bore so that, during opening and closing of the valve member, its movement is guided.

The seating region 18c defines the frusto-conical seating surface which engages with the valve seating 16. Due to the valve member being guided for movement within the valve housing bore 14, the seating region 18c of the valve member seats exactly and repeatably on a precise diameter of the valve seating 16 and, hence, wear of the seating, and enlargement of the seating due to wear, is minimised. Typically, the differential angle between the conical surface of the valve member 18 and the conical surface of the valve seating 16 is between 1 and 2 degrees (included angle), and preferably 1.5 degrees (+/- 1 degree).

At its end remote from the seating region 18c, the valve member 18 is provided with an end region 18e of reduced diameter. The end region 18e defines, together with the adjacent region 14a and the transition region of the housing bore 14, a portion of a chamber 22 for receiving a biasing spring 24. One end of the spring 24 is in abutment with a stepped surface 26 defined between the enlarged region 18a and the end region 18e of the valve member in the transition region 14c of the housing bore 14.

The other end of the spring 24 is engaged with a stepped surface 30 of a stop member 28 which is received within the valve housing bore 14a in a fixed manner. The stop member 28 includes an enlarged diameter region 28a of substantially the same diameter as the first region 14a of the valve housing bore, and an end region 28b of reduced diameter. An end face of the end region 28b of the stop member defines the abutment surface 30 for the valve member 18. The end region 28b of the stop member, the end region 18e of the valve member and the adjacent region 14a, 14b of the valve housing bore together define the chamber 22 for housing the spring 24.

A step between the enlarged region 28a of the stop member and the end region 28b of the stop member defines the stepped surface 30 for the spring 24. The purpose of the spring 24 is to bias the valve member 18 towards the valve seating 16.

The valve member 18 is provided with an axial flow passage 32 which defines a part of an outlet flow passage through the valve member 18 to allow fuel from the high pressure pump volume to flow to the common rail when the valve member 18 is moved away from the valve seating 16. An axial flow passage 34 provided in the stop member 28 defines a further portion of the outlet flow passage. The valve member 18 is also provided with a cross drilling 36, which intercepts with the axial flow passage in the valve member 18 and opens, at each end, into a chamber 38 defined within the valve housing bore 14.

In use, when the pressure of fuel within the high pressure pump volume exceeds the pressure of fuel within the common rail combined with the biasing force of the spring 24, the valve member 18 is caused to lift away from the valve seating 16. Fuel within the pump volume is therefore able to flow through the inlet drilling 20, past the valve seating 16, into the chamber 38, through the cross drilling 36 and into the axial flow passage 32 in the valve member 18 and, hence, into the axial flow passage 34 in the stop member 28. Beyond the stop member 28, the flow progresses through a further outlet passage 38 defined within the housing 12 to a high pressure pipe (not shown) and, hence, to the common rail.

Movement of the valve member 18 is guided due to cooperation between the enlarged diameter region 18a of the valve member 18 and the guide portion 14b of the valve housing bore 14. Once the valve member 18 has moved through a predetermined amount, the reduced diameter region 18e at its end comes into contact with the abutment surface 30 defined by the end region 28b of the stop member 28 and valve movement is halted. Throughout opening movement, the rate of flow of fuel through the valve assembly increases linearly with the extent of opening of the valve due to the geometrical nature of the valve member/valve seating interface, which gives improved valve performance.

The valve member 18 remains open until the pressure of fuel in the common rail, together with the spring force, is sufficient to overcome the pressure of fuel in the pump volume. For example, this occurs during filling of the pump chamber through an inlet valve assembly (not shown) of the pump when the pumping plunger is retracting from the plunger bore and pressure within the pump chamber is relatively low. In such circumstances the valve member 18 is urged against its seating so that fuel flow past the valve seating 16 is prevented and the flow through the outlet passage 32, 34 to the common rail is halted. There is a period of time when the plunger starts to withdraw from the plunger bore, before the inlet valve assembly has opened, during which fuel can flow from the common rail into the pumping chamber, following the plunger. This expansion results in a pressure drop which causes the outlet valve to close to prevent further loss of pressurised fuel from the rail.

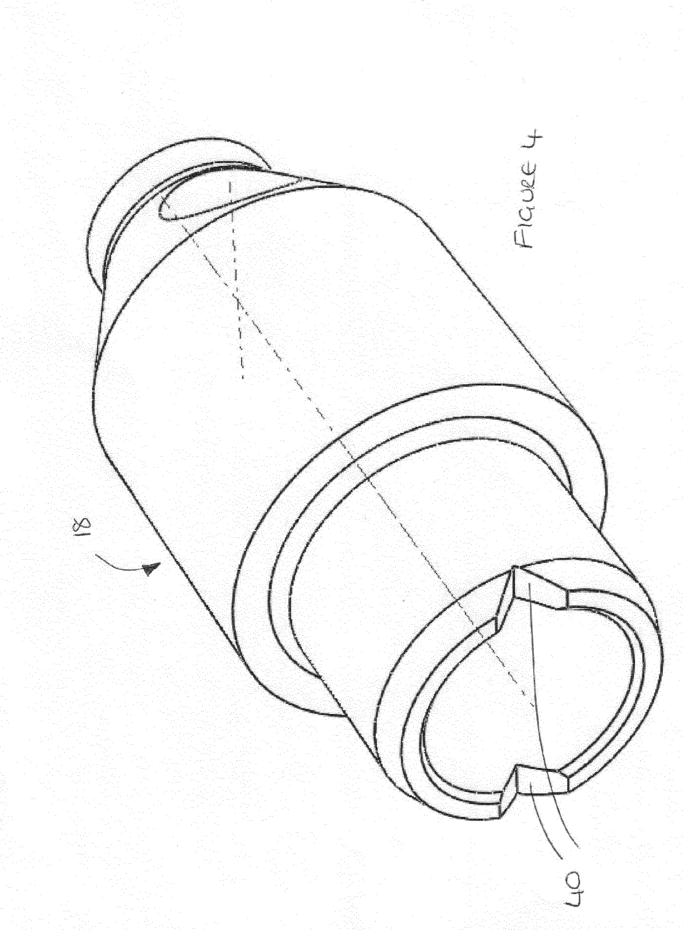

In order to ensure the valve member 18 is able to close, the end face of the valve member is provided with diametrically opposed notches 40, as shown in Figure 4. The notches 40 ensure there is a continuous but restricted flow path between the axial flow passage 32 in the valve member 18 and the spring chamber 22. This prevents the occurrence of a hydraulic lock within the spring chamber 22 when the valve member 18 is in abutment with the stop member 28 and the pressure differential across the valve member 18 is such that the valve member is urged to close.

The position of the lift stop member 28 within the bore 14a is adjustable so that the extent of maximum lift of the valve member 18 is adjustable between applications. For example, for applications in which the flow rate from the pump chamber is relatively low, the lift stop member can be located more closely to the end region 18e of the valve member 18, whereas for higher flow rate applications the lift stop member 28 may be arranged further back from the valve member 18 to allow a greater extent of opening movement.

It will be appreciated that whilst the conical/conical interface between the valve member 18 and the valve seating 16 is an essential feature of the invention, the invention could be modified to take many alternative forms to that described herein, without departing from the scope of the appended claims.

## Claims

1. An outlet valve assembly for a common rail fuel pump for an internal combustion engine, the outlet valve arrangement comprising:
a valve member (18) provided with a frusto-conical surface which is engageable with a valve seating (16) to control fuel flow between a high pressure pump volume of the fuel pump and a common rail located downstream of the pump volume;
an outlet flow passage (36, 32, 34, 38) for fuel through which fuel flows to the common rail when the valve member (18) is lifted from the valve seating (16); and
a valve housing (12) provided within a valve housing bore (14), the valve member (18) including a guide portion (18a) which cooperates with the valve housing bore (14) so as to guide movement of the valve member (18), in use;
wherein the valve seating (16) is of frusto-conical form.

2. The outlet valve assembly as claimed in claim 1, wherein the valve seating is defined by a region of the valve housing bore (14).

3. The outlet valve assembly as claimed in claim 1 or claim 2, wherein the valve member (18) is provided with a bore to define an axial flow passage (32) for fuel flow through the valve member (18) which defines at least a part of the outlet flow passage.

4. The outlet valve assembly as claimed in claim 3, wherein the valve member (18) is further provided with at least one cross drilling (36) which communicates with the axial flow passage (32) to allow fuel flow through into the axial flow passage when the valve member (18) is lifted from the valve seating (16).

5. The outlet valve assembly as claimed in any of claims 1 to 4, further comprising a lift stop member (28) which serves to limit the extent of opening movement of the valve member (18) when it is lifted away from the valve seating (16).

6. The outlet valve assembly as claimed in claim 5, wherein the lift stop member (28) is received within the valve housing bore (14).

7. The outlet valve assembly as claimed in claim 5 or claim 6, further comprising a spring (24) which serves to urge the valve member (18) towards the valve seating (16).

8. The outlet valve assembly as claimed in claim 7, wherein one end of the spring (24), is engaged with the lift stop member (28).

9. The outlet valve assembly as claimed in claim 8, wherein the other end of the spring (24) is engaged with the valve member (18).

10. The outlet valve assembly as claimed in any of claims 7 to 9, wherein the spring (24) is housed within a spring chamber (22) defined within the valve housing bore (14).

11. The outlet valve assembly as claimed in claim 10, wherein the valve member (18) has an end face which engages with the lift stop member (28), the end face being provided with one or more grooves, notches or recesses (40) to allow fuel flow therethrough so as to prevent the occurrence of hydraulic lock in the spring chamber (22).

12. The outlet valve assembly as claimed in any of claims 5 to 11, wherein the lift stop member (28) is provided with an axial flow passage (34) which forms a part of the outlet flow passage.

13. The outlet valve assembly as claimed in any of claims 5 to 12, wherein the lift stop member (28) is received within a first portion (14a) of the valve housing bore (14) and the valve member (18) is received within a second portion (14b) of the valve housing bore (14), wherein the diameter of the first portion (14a) is enlarged compared with the diameter of the second portion (14b).

14. A common rail fuel pump for use in a common rail fuel system, the common rail fuel pump having a high pressure pump volume for supplying pressurised fuel to a common rail of the fuel system, and an outlet valve assembly as claimed in any of claims 1 to 13.

15. The common rail fuel pump as claimed in claim 14, comprising a main pump housing which is integrally formed with the valve housing (12) so that movement of the valve member (18) is guided within the main pump housing and the valve member seats on a valve seating defined within the main pump housing.
